# EUROPÄISCHE PATENTSCHRIFT

(11) **EP 0 650 993 B1**
(45) Veröffentlichungstag und Bekanntmachung des Hinweises auf die Patenterteilung: **13.01.1999**
(21) Anmeldenummer: 94116327.1
(22) Anmeldetag: 17.10.1994
(51) Int. Cl.: C08G 18/76

(54) **Verfahren zur Herstellung halbharter Urethangruppen aufweisender Schaumstoffe mit verbesserten Fliesseigenschaften**
Process for the preparation of semi-flexible foams containing urethane goups, showing improved flow properties
Procédé de préparation de mousses semi-rigides contenant des groupements uréthane avec des caractéristiques d'écoulements améliorés

(30) Priorität: 29.10.1993 DE 4337012
(43) Veröffentlichungstag der Anmeldung: 03.05.1995
(73) Patentinhaber: BAYER AG, 51368 Leverkusen (DE)
(72) Erfinder: Liman, Ulrich, Dr., D-40764 Langenfeld (DE); Gansen, Peter, Dr., Pittsburgh, PA 15205 (US)

(56) Entgegenhaltungen:
- EP-A- 0 344 551
- EP-A- 0 550 901
- EP-A- 0 557 792
- EP-A- 0 566 247

## Beschreibung

Die vorliegende Erfindung betrifft ein Verfahren zur Herstellung halbharter Urethangruppen aufweisender Schaumstoffe, welche während des Schäumprozesses eine sehr gute Fließfähigkeit besitzen und aus diesem Grunde auch kompliziert gebaute geschlossene Formen, wie sie z.B. im Automobilbau bei der Herstellung hinterschäumter Schalttafeln üblich sind, ohne nachteilige Fehlstellen und Lunker auszufüllen vermögen.

In der DE-OS 4 001 556 werden als Polyisocyanat-Komponente Abmischungen aus Toluylendiisocyanat und Diphenylmethandiisocyanat zur Herstellung von Weichschaumstoffen beschrieben, diese sind aber nicht für die Schalttafelproduktion geeignet, weil sie keine ausreichende Fließfähigkeit bei der Herstellung von halbharten Polyurethanschaumstoffen besitzen. Zudem ist Toluylendiisocyanat vom Verarbeiter aus gewerbehygienischen Gründen häufig unerwünscht.

Die EP-A-0 550 901 beschreibt die Herstellung von Harlen PU-Schaumstoffen aus Polyisocyanatmischungen der Diphenylmethanreihe nach dem Präpolymerverfahren.

Überraschenderweise wurde nun gefunden, daß beim Einsatz spezieller Gemische aus Diphenylmethandiisocyanat (MDI) und Polyphenylenpolymethylenpolyisocyanat (PMDI) in schäumfähigen Reaktionsgemischen deutliche Verbesserungen von deren Fließeigenschaften erzielt werden können. Diese MDI/PMDI-Gemische unterscheiden sich von den bisher bekannten durch den relativ hohen Gehalt an monomeren MDI-Isocyanaten, insbesondere an 2,4'-MDI. Übliche Modifizierungen dieser Isocyanate wie z.B. durch Urethan-, Carbodiiamid-, Isocyanurat- oder Harnstoffgruppen führen zu gleichen positiven Effekten.

Gegenstand der Erfindung ist ein Verfahren zur Herstellung halbharter Urethangruppen aufweisender Schaumstoffe durch Umsetzung von:
1) Polyisocyanaten mit
2) mindestens zwei gegenüber Isocyanaten aktive Wasserstoffatome aufweisenden Verbindungen vom Molekulargewicht 400 bis 10.000 in Gegenwart von
3) Wasser und/oder organischen Treibmitteln, gegebenenfalls in Gegenwart von
4) Verbindungen mit mindestens zwei gegenüber Isocyanaten reaktionsfähigen Wasserstoffatomen und einem Molekulargewicht von 32 bis 399 als Vernetzer und
5) an sich bekannten Hilfs- und Zusatzstoffen,
dadurch gekennzeichnet, daß als Ausgangs-Polyisocyanate 1) Polyisocyanatmischungen aus:

| | |
|---|---|
| 55 bis 87 Gew.-% | 4,4'-Diphenylmethandiisocyanat |
| 8 bis 40 Gew.-% | 2,4'-Diphenylmethandiisocyanat |
| 0,1 bis 4 Gew.-% | 2,2'-Diphenylmethandiisocyanat |
| 5 bis 35 Gew.-% | Polyphenylpolymethylenpolyisocyanaten |

verwendet werden, und wobei die Herstellung nicht nach dem Prepolymer oder Semiprepolymer-Verfahren erfolgt.

In einer bevorzugten Ausführungsform werden als Ausgangs-Polyisocyanate 1) Polyisocyanatmischungen in folgender Zusammensetzung verwendet:

| | |
|---|---|
| 60 bis 75 Gew.-% | 4,4'-Diphenylmethandiisocyanat |
| 10 bis 25 Gew.-% | 2,4'-Diphenylmethandiisocyanat |
| 1 bis 3 Gew.-% | 2,2'-Diphenylmethandiisocyanat |
| 20 bis 30 Gew.-% | Polyphenylpolymethylenpolyisocyanate. |

In einer bevorzugten Ausführungsform werden mit dem zum Schaumstoff führenden Reaktionsgemisch Kunststoffolien unter Ausbildung von Folienverbundschaumstoffen hinterschäumt.

Beim erfindungsgemäßen Verlauf werden folgende Ausgangskomponenten eingesetzt:
1. Die obengenannten Gemische aus den Isomeren des Diphenylmethandiisocyanats und Polyphenylpolymethylenpolyisocyanaten.
2. Ausgangskomponenten sind ferner Verbindungen mit mindestens zwei gegenüber Isocyanaten reaktionsfähigen Wasserstoffatomen und einem Molekulargewicht in der Regel von 400 bis 10.000.
   Hierunter versteht man neben Aminogruppen, Thiolgruppen oder Carboxylgruppen aufweisenden Verbindungen vorzugsweise Hydroxylgruppen aufweisende Verbindungen, vorzugsweise Polyether, Polyester, Polycarbonate, Polylactone und Polyamide, insbesondere 2 bis 8 Hydroxylgruppen aufweisende Verbindungen, speziell solche vom Molekulargewicht 1.000 bis 8.000, vorzugsweise 2.000 bis 4.000, z.B. derartige, mindestens 2, in der Regel 2 bis 8, vorzugsweise 2 bis 4, Hydroxylgruppen aufweisende Verbindungen, wie sie für die Herstellung von homogenen und von zellförmigen Polyurethanen an sich bekannt sind und wie sie z.B. in der DE-OS 2 832 253, Seiten 11 bis 18, beschrieben werden. Auch Gemische verschiedener derartiger Verbindungen kommen erfindungsgemäß in Frage.
   Ganz besonders bevorzugt werden Polyetherpolyole eingesetzt, die durch Alkoxylierung von trifunktionellen Startermolekülen, insbesondere von Trimethylolpropan und/oder Glyzerin erhalten worden sind. Bei den Alkylenoxiden, die bei der Alkoxylierungsreaktion zum Einsatz gelangen, handelt es sich insbesondere um Propylenoxid oder Ethylenoxid bzw. um Gemische dieser beiden Alkylenoxide. Die genannten Alkylenoxide können bei der Alkoxylierungsreaktion auch nacheinander zum Einsatz gelangen. Weitere im Prinzip geeignete Polyole, die zum Einsatz gelangen können, sind beispielsweise in der EP-A 0 380 993 beschrieben.
3. Neben Wasser können als Treibmittel ebenfalls entweder allein oder zusammen mit Wasser verwendet werden: leichtflüchtige C₁-C₆-Kohlenwasserstoffe oder organische Lösungsmittel wie Aceton oder Diethylether.
4. Gegebenenfalls mitzuverwendende Ausgangskomponenten sind Verbindungen mit mindestens zwei, vorzugsweise 2 bis 6, gegenüber Isocyanaten reaktionsfähigen Wasserstoffatomen und einem Molekulargewicht von 32 bis 399. Beispielhaft seien genannt Diethanolamin, Triethanolamin, Ethylenglycol, Propylenglycol, Butandiol 1,4, sowie die Isomere des Diethyltoluylendiamins. Die Verbindungen 4) sind im Gemisch der Komponenten 2), 3), 4) und 5) mit 1 bis 20 Gew.-% enthalten.
5. Mitverwendet werden gegebenenfalls an sich bekannte Hilfs- und Zusatzstoffe wie Emulgatoren und Schaumstabilisatoren. Als Emulgatoren sind solche auf Basis alkoxilierter Fettsäuren und höherer Alkohole bevorzugt.
   Als Schaumstabilisatoren kommen vor allem Polyethersiloxane, speziell wasserlösliche Vertreter, in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z.B. in den US-PS 2 834 748, 2 917 480 und 3 629 308 beschrieben. Auch die aus der Polyurethanchemie an sich bekannten Katalysatoren wie tert.-Amine und/oder metallorganische Verbindungen können mitverwendet werden.
   Auch Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe, ferner Stabilisatoren gegen Alterungseinflüsse. Weichmacher und fungistatisch und bakteriostatisch wirkende Substanzen sowie Füllstoffe wie Bariumsulfat, Kieselgur, Ruß oder Schlämmkreide können mitverwendet werden. Als Flammschutzmittel werden an sich bekannte Flammschutzmittel, vorzugsweise bei 20°C flüssige Produkte, verwendet.
   Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl Hanser Verlag, München 1966, z.B. auf den Seiten 103 bis 113 beschrieben.

### Durchführung des erfindungsgemäßen Verfahrens

Die Reaktionskomponenten werden erfindungsgemäß nach dem an sich bekannten Einstufenverfahren, zur Umsetzung gebracht, wobei man sich oft maschineller Einrichtungen bedient, z.B. solcher, die in der US-PS 2 764 565 beschrieben werden. Im allgemeinen wird die Umsetzung bei Kennzahlen von 50 bis 180, bevorzugt 70 bis 120 durchgeführt. Das erfindungsgemäße Verfahren eignet sich zur Herstellung halbharter Polyurethanschaumstoffe (Stauchhärte von 20 bis 400 KPa bei 40 % Verformung) mit einer Rohdichte von 30 bis 500, vorzugsweise 30 bis 200 kg/m³, wie sie unter anderem in an sich bekannter Weise zum Hinterschäumen von Kunststoffolien zwecks Herstellung von Folienverbundschaumstoffen für Polsterzwecke bzw. energieabsorbierende Formteile für den Innenbereich von Kraftfahrzeugen, Flugzeugen, Schiffen und anderen Verkehrsmitteln (Armaturenbretter, Türinnenverkleidungen, Armlehnen, Kopfstützen, Seitenaufprallschutz u. dgl.) zum Einsatz gelangen.

Für diesen speziellen Zweck geeignete Kunststoffolien sind alle beliebigen Deckschichten, die bisher bei der Herstellung von Folienverbundwerkstoffen durch Hinterschäumen von Kunststoffolien mit Polyurethanschaumstoffen verwendet worden sind. Beispielhaft genannt seien Folien aus Polyvinylchlorid (PVC), Polyurethan, Polymerblends aus PVC und ABS oder thermoplastischen Polyolefinen.

Vorzugsweise erfolgt die Durchführung des erfindungsgemäßen Verfahrens dergestalt, daß man die Innenwände einer Form zumindest teilweise mit der zu hinterschäumenden Kunststoffolie auskleidet und dann das Formwerkzeug mit dem schäumfähigen Gemisch befüllt. Als Formmaterial kommen Metall, z.B. Aluminium, oder Kunststoffe, z.B. Epoxidharz, in Frage. Die für die Innenauskleidung der Formen verwendeten Folien können in an sich bekannter Weise vorgeformt werden, wobei man sich der bekannten Technik des Tiefziehens bzw. "Powder-slush" bedient.

Erfindungsgemäß kann man in diesem Zusammenhang so vorgehen, daß man in die Form so viel schaumfähiges Reaktionsgemischt einträgt, daß der gebildete Schaumstoff die Form gerade ausfüllt. Man kann aber auch so arbeiten, daß man mehr schaumfähiges Reaktionsgemisch in die Form einträgt, als zur Ausfüllung des Forminneren mit Schaumstoff notwendig ist. Im letztgenannten Fall wird somit unter "overcharging" gearbeitet; eine derartige Verfahrensweise ist z.B. aus den US-PS 3 178 490 und 3 182 104 bekannt.
Die nachfolgenden Beispiele dienen der weiteren Erläuterung des erfindungsgemäßen Verfahrens.

### Ausführungsbeispiele

### Herstellung der Schaumstoffe und Durchführung der Fließweemessung

Die Herstellung der Schaumstoffe erfolgt nach der Methode der Handverschäumung. Dabei werden alle Bestandteile mit Ausnahme der Isocyanatkomponente zusammengegeben und 30 Sekunden lang vorgerührt (Rührgeschwindigkeit: 1.000 Umdrehungen/Minute). Anschließend wird die Isocyanatkomponente zugesetzt und während weiterer 10 Sekunden bei Raumtemperatur weiter gerührt. Die NCO-Kennzahl beträgt in allen Beispielen 100.

Die Fließfähigkeit des Reaktionsgemisches wurde in einer weiteren Versuchsreihe bestimmt, dabei wird die Polyolformulierung wie oben beschrieben mit der Isocyanatkomponente in einem Becherglas unter Rühren bei Raumtemperatur zur Reaktion gebracht.

In einem Fließlabyrinth, das in der Veröffentlichung von R.G. Petrella, J.D. Tobias, J. of Cellular Plastics, 421440, 1989 beschrieben ist, wurde der Fließweg in cm vom Ausgangspunkt aus bestimmt. Es wurden jeweils 250 g (± 4 g) eingefüllt.

### Beispiel 1 (erfindungsgemäß)

a) Polyolformulierung:

| | |
|---|---|
| 92 Gew.-Teile | eines Polyethers der OH-Zahl 28, hergestellt durch Propoxylierung von Trimethylolpropan und anschließender Ethoxylierung (PO:EO-Gewichtsverhältnis: 83/17) |
| 0,5 Gew.-Teile | Diethanolamin |
| 2,0 Gew.-Teile | Triethanolamin |
| 0,25 Gew.-Teile | N,N-Bis(dimethylaminopropyl)formamid |
| 0,25 Gew.-Teile | permethyliertes Tetraethylenpentamin |
| 1,95 Gew.-Teile | Wasser |
| 0,5 Gew.-Teile | Ruß, angeteigt in dem obigen Polyether der OH-Zahl 28 (s.o.) |
| 2,0 Gew.-Teile | OH-funktioneller Polyester, (Reaktionsprodukt aus: Adipinsäure/1,6 Hexandiol OHZ: 160, 50%ig gelöst in Butylbenzylphthalat |

b) Isocyanatkomponente (NCO Gehalt: 32,5 %):

| | |
|---|---|
| 15 Gew.-% | Polyphenylpolymethylenpolyisocyanate |
| 60 Gew.-% | 4,4'-Diphenylmethan-diisocyanat |
| 23 Gew.-% | 2,4'-Diphenylmethan-diisocyanat |
| 2 Gew.-% | 2,2'-Diphenylmethan-diisocyanat |
| | |
| 100 Gew.-Teile | der Polyolformulierung a) werden mit |
| 34,4 Gew.-Teilen | der Isocyanatmischung vermischt. |

### Beispiel 2 (Vergleichsbeispiel)

a) Polyolformulierung: wie in Beispiel 1
b) Isocyanatkomponente (NCO-Gehalt: 31,5%)

| | |
|---|---|
| 55 Gew.% | Polyphenylenpolymethylenpolyisocyanat |
| 42 Gew.% | 4,4'-Diphenylmethan-diisocyanat |
| 2,5 Gew.% | 2,4'-Diphenylmethan-diisocyanat |
| | |
| 0,05 Gew.% | 2,2'-Diphenylmethan-diisocyanat |
| 100 Gew.-Teile | Polyolformulierung wurde mit |
| 44 Gew.-Teilen | der Isocyanatkomponente vermischt. |

| Vergleich der Fließwege (Tabelle 1) | | |
|---|---|---|
| Beispiel | Fließweg in cm | Bemerkungen |
| 1 | 150 | erfindungsgemäß |
| | | |
| 2 | 134 | Vergleichsbeispiel* |

| | | |
|---|---|---|
| * Die Schaumstruktur des Vergleichsbeispieles war an den Umlenkstellen im Labyrinth deutlich gröber als bei dem erfindungsgemäßen Beispiel 1. | | |

## Patentansprüche

1. Verfahren zur Herstellung von halbharten, Urethangruppen aufweisenden Schaumstoffen durch Umsetzung von:
1) Polyisocyanaten mit
2) mindestens zwei gegenüber Isocyanaten aktive Wasserstoffatome aufweisenden Verbindungen vom Molekulargewicht 400 bis 10.000 in Gegenwart von
3) Wasser und/oder organischen Treibmitteln, gegebenenfalls in Gegenwart von
4) Verbindungen mit mindestens zwei gegenüber Isocyanaten reaktionsfähigen Wasserstoffatomen und einem Molekulargewicht von 32 bis 399 als Vernetzer und
5) an sich bekannten Hilfs- und Zusatzstoffen,
dadurch gekennzeichnet, daß als Polyisocyanate 1) Polyisocyanatmischungen aus:
| | |
|---|---|
| 55 bis 87 Gew.-% | 4,4'-Diphenylmethandiisocyanat |
| 8 bis 40 Gew.-% | 2,4'-Diphenylmethandiisocyanat |
| 0,1 bis 4 Gew.-% | 2,2'-Diphenylmethandiisocyanat |
| 5 bis 35 Gew.-% | Polyphenylpolymethylenpolyisocyanaten |
verwendet werden, und wobei die Herstellung nicht nach dem Prepolymeroder Semiprepolymer-Verfahren erfolgt.

2. Verfahren gemäß Anspruch 1, dadurch gekennzeichnet, daß als Polyisocyanate 1) Polyisocyanatmischungen aus:
| | |
|---|---|
| 60 bis 75 Gew.-% | 4,4'-Diphenylmethandiisocyanat |
| 10 bis 25 Gew.-% | 2,4'-Diphenylmethandiisocyanat |
| 1 bis 3 Gew.-% | 2,2'-Diphenylmethandiisocyanat |
| 10 bis 30 Gew.-% | Polyphenylpolymethylenpolyisocyanate. |
verwendet werden.

3. Ausführungsform des Verfahrens gemäß den Ansprüchen 1 und 2, dadurch gekennzeichnet, daß man mit dem zum Schaumstoff führenden Reaktionsgemisch Kunststoffolien unter Ausbildung von Folienverbundschaumstoffen hinterschäumt.

## Claims

1. Process for the production of semi-rigid foams containing urethane groups by reaction of
1) polyisocyanates with
2) compounds containing at least two hydrogen atoms active towards isocyanates and of a molecular weight of 400 to 10000 in the presence of
3) water and/or organic blowing agents, optionally in the presence of
4) compounds having at least two isocyanate-reactive hydrogen atoms and a molecular weight of 32 to 399 as crosslinking agents and
5) per se known auxiliary substances and additives,
characterised in that the polyisocyanates 1) used are polyisocyanate mixtures of
| | |
|---|---|
| 55 to 87 wt.% | of 4,4'-diphenylmethane diisocyanate |
| 8 to 40 wt.% | of 2,4'-diphenylmethane diisocyanate |
| 0.1 to 4 wt.% | of 2,2'-diphenylmethane diisocyanate |
| 5 to 35 wt.% | of polyphenylpolymethylene polyisocyanates, |
and wherein production does not proceed in accordance with the prepolymer or semi-prepolymer process.

2. Process according to claim 1, characterised in that the polyisocyanates 1) used are polyisocyanate mixtures of
| | |
|---|---|
| 60 to 75 wt.% | of 4,4'-diphenylmethane diisocyanate |
| 10 to 25 wt.% | of 2,4'-diphenylmethane diisocyanate |
| 1 to 3 wt.% | of 2,2'-diphenylmethane diisocyanate |
| 10 to 30 wt.% | of polyphenylpolymethylene polyisocyanates. |

3. Process according to claims 1 and 2, characterised in that plastic films are foam backed with the foam-forming reaction mixture to form film/foam composites.

## Revendications

1. Procédé pour la préparation de mousses semi-rigides présentant des groupes uréthane par réaction de :
1) polyisocyanates avec
2) des composés présentant au moins deux atomes d'hydrogène actifs avec les isocyanates de poids moléculaire 400 à 10 000 en présence
3) d'eau et/ou d'agents moussants organiques, éventuellement en présence de
4) composés avec au moins deux atomes d'hydrogène pouvant réagir avec les isocyanates et avec un poids moléculaire de 32 à 399 comme agent de réticulation et
5) d'agents auxiliaires et d'additifs connus en eux-mêmes,
caractérisé en ce que l'on utilise comme polyisocyanates 1) des mélanges de polyisocyanates constitués de :
55 à 87% en poids de diisocyanate de 4,4'-diphénylméthane
8 à 40% en poids de diisocyanate de 2,4'-diphénylméthane
0,1 à 4% en poids de diisocyanate de 2,2'-diphénylméthane
5 à 35% en poids de polyphénylpolyméthylènepolyisocyanates,
la préparation n'étant pas réalisée selon le procédé prépolymére ou semi-prépolymère.

2. Procédé selon la revendication 1, caractérisé en ce que l'on utilise comme polyisocyanates 1) des mélanges de polyisocyanates constitués de :
60 à 75% en poids de diisocyanate de 4,4'-diphénylméthane
10 à 25% en poids de diisocyanate de 2,4'-diphénylméthane
1 à 3 % en poids de diisocyanate de 2,2'-diphénylméthane
10 à 30% en poids de polyphénylpolyméthylènepolyisocyanates.

3. Mode de réalisation du procédé selon les revendications 1 et 2, caractérisé en ce que l'on fait mousser par l'arrière le mélange réactionnel produisant la mousse sur des feuilles de matière plastique avec formation de mousses liées à des feuilles.
